# EUROPÄISCHE PATENTSCHRIFT

(11) **EP 1 757 915 B1**
(45) Veröffentlichungstag und Bekanntmachung des Hinweises auf die Patenterteilung: **31.08.2016**
(21) Anmeldenummer: 06014000.1
(22) Anmeldetag: 06.07.2006
(51) Int. Cl.: G01K 1/10, G01K 1/12

(54) **Vorrichtung zur Temperaturmessung in Metallschmelzen**
Device for measuring temparature in molten metal
Appareil pour la mesure de température dans du métal en fusion

(30) Priorität: 24.08.2005 DE 102005040311
(43) Veröffentlichungstag der Anmeldung: 28.02.2007
(73) Patentinhaber: Heraeus Electro-Nite International N.V., 3530 Houthalen (BE)
(72) Erfinder: Kendall, Martin, 3500 Hasselt (BE)
(74) Vertreter: Heraeus IP

(56) Entgegenhaltungen:
- EP-A- 0 558 808
- DE-C1- 10 106 476
- FR-A1- 2 645 959
- GB-A- 1 312 289
- US-A- 4 060 095
- US-A- 5 197 805
- US-A- 5 209 571

## Beschreibung

Die Erfindung betrifft eine Vorrichtung zur Temperaturmessung in Metallschmelzen, insbesondere in Eisen- oder Stahlschmelzen, mit einem Thermoelement, das in einem Thermoelementrohr angeordnet ist, mit einem äußeren Schutzkörper, der im wesentlichen aus Graphit und Metalloxid gebildet ist, wobei das Thermoelementrohr in dem Schutzkörper unter Bildung eines Zwischenraumes beabstandet angeordnet ist und wobei in dem Zwischenraum ein isolierendes Material und ein sauerstoffreduzierendes Material angeordnet sind. Des weiteren betrifft die Erfindung ein Verfahren zur Herstellung einer solchen Vorrichtung.

Derartige Vorrichtungen sind beispielsweise aus EP 558 808 B1 oder aus US 5,209,571 A bekannt. In diesen Druckschriften ist beschrieben, dass zum Schutz eines Thermoelementes zwischen dem Thermoelementrohr und dem äußeren Schutzkörper ein Gettermaterial angeordnet ist. Dieses Gettermaterial kann das Thermoelementrohr rohrförmig umgeben. Das Material der Vorrichtung ist beim Gebrauch größeren Temperaturschwankungen ausgesetzt und unterliegt daher thermischen Spannungen. Die thermischen Spannungen können zu Schäden an den einzelnen Materialien führen. Darüber hinaus sind ähnliche Vorrichtungen aus GB 2193375 bekannt.

Aus DE 101 06 476 C1 ist eine Messeinrichtung bekannt, deren äußerer Schutzkörper aus einem glasigen Kohlenstoff besteht. Diese äußere Schutzschicht ist an sich dicht. Aus US-A 4,060,095 ist eine Temperaturmesseinrichtung bekannt, deren äußeres Schutzrohr als Metallrohr ausgebildet ist.

Aus der FR2645959 ist eine weitere Vorrichtung zur Messung der Temperatur in Metallschmelzen bekannt.

Der Erfindung liegt die Aufgabe zu Grunde, eine Vorrichtung zur Temperaturmessung in Metallschmelzen zu schaffen, die die bestehenden Vorrichtungen verbessert.

Die Aufgabe wird durch die Merkmale der unabhängigen Ansprüche gelöst. Die erfindungsgemäße Vorrichtung zur Temperaturmessung in Metallschmelzen, insbesondere Eisen- oder oxid gebildet ist, wobei das Thermoelementrohr in dem Schutzkörper unter Bildung eines Zwischenraumes beabstandet angeordnet ist und wobei in dem Zwischenraum ein isolierendes Material und ein Sauerstoff reduzierendes Material angeordnet sind. Unter einem Thermoelementrohr im Sinne der Erfindung wird ein mindestens einseitig geschlossenes Rohr verstanden, in dem die Thermoelementleitungen angeordnet sind, wobei die Thermoelementleitungen durch mindestens einen isolierenden Körper voneinander getrennt sind. Dieser isolierende Körper kann beispielsweise als Doppelrohr oder als einzelne Rohrsegmente ausgebildet sein. Dadurch, dass das isolierende Material und das Sauerstoff reduzierende Material als Pulvermischung ein Rohr bilden, welches das Thermoelementrahr beabstandet umgibt und/oder welches von dem Schutzkörper beabstandet umgeben ist, welches also beweglich ist relativ zu dem Thermoelementrohr und/oder zu dem Schutzkörper, werden thermische Spannungen ausgeglichen, so dass die Vorrichtung insgesamt weniger bruchanfällig ist. Vorzugsweise ist das isolierende Material ein Oxid, insbesondere Aluminiumoxid, und das Sauerstoff reduzierende Material ein Unedelmetall, insbesondere Aluminium. Der Aluminiumgehalt, bezogen auf die Pulvermischung, beträgt vorteilhafterweise 10 bis 40 Gew.-%, insbesondere 15 bis 33 Gew.-%.

Das Rohr kann einseitig geschlossen, beidseitig offen oder als eine Vielzahl von hintereinander angeordneten Rohrsegmenten ausgebildet sein. Zusätzlich zu der Pulvermischung kann es ein Bindemittel aufweisen. Bindemittel für Hochtemperaturanwendungen sind grundsätzlich bekannt, beispielsweise kann ein Phenolbinder oder ein Methylzellulosebinder verwendet werden. Sie festigen das Material des Rohres, ohne die angestrebte Getterfunktion zu verhindern. Das Rohr selbst kann trocken gepresst, gegossen, extrudiert oder mittels Plasmaspritzen erzeugt werden, wobei eine hohe Dichte des Rohres bei einer minimalen Porosität und geringen Durchlassfähigkeit für oxidierende Gase erzeugt wird. Der Abstand zwischen dem Rohr aus dem isolierenden Material und dem Sauerstoff reduzierenden Material einerseits und dem Thermoelementrohr oder dem Schutzkörper andererseits ist zumindest teilweise gefüllt mit Fasern oder Kugeln, ohne die erforderliche Beweglichkeit zu verhindern. Die genannten Fasern oder Kugeln tragen zur Stabilisierung der Anordnung bei. Die Fasern oder Kugeln sind aus Aluminiumoxid oder aus einer Mischung aus einem Oxid, insbesondere Aluminiumoxid, und einem Sauerstoff reduzierenden Material, insbesondere einem Unedelmetall, wie Aluminiumoxid gebildet.

Ein Verfahren zur Herstellung der beschriebenen Vorrichtung ist dadurch gekennzeichnet, dass aus der Pulvermischung ein Rohr gebildet wird, in welches das Thermoelement hineingesteckt und dass um das Rohr herum der Schutzkörper angeordnet

Die Aufgabe wird erfindungsgemäß für ein Verfahren zur Herstellung der beschriebenen Vorrichtung dadurch gelöst, dass aus der Pulvermischung ein Rohr gebildet wird, in welches das Thermoelement hineingesteckt und dass um das Rohr herum der Schutzkörper angeordnet wird. Es ist auch möglich, das Rohr (Getterrohr) zunächst in den Schutzkörper einzubringen (und beispielsweise zusammenzupressen) und im Anschluss das Thermoelementrohr hineinzustecken.

Die Erfindung wird nachfolgend beispielhaft anhand einer Zeichnung erläutert.

In der Zeichnung zeigen die Figuren 1 bis 3 verschiedene Ausführungsformen der erfindungsgemäßen Vorrichtung.
- Figur 1: eine Vorrichtung mit geschlossenem Sauerstoff reduzierendem Rohr
- Figur 2: eine Vorrichtung mit einem Rohr aus einer Vielzahl von Rohrsegmenten und
- Figur 3: eine Vorrichtung mit offenem Sauerstoff reduzierendem Rohr.

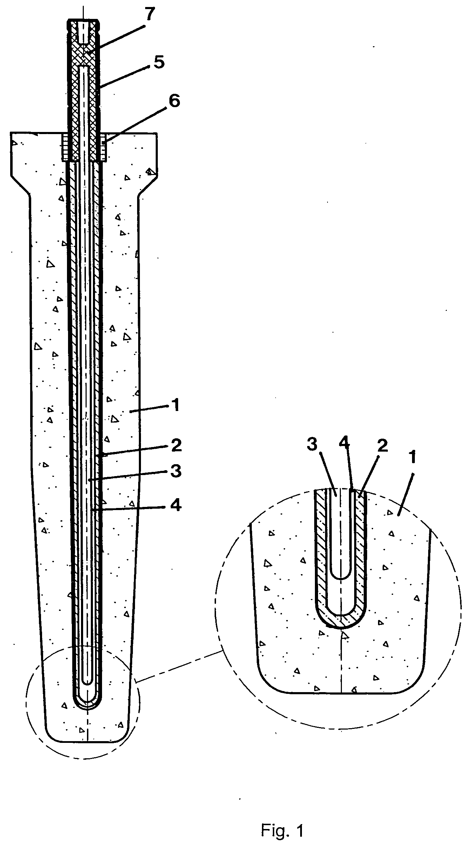

In Figur 1 ist eine Ausführungsform der Erfindung beispielhaft dargestellt. In einem äußeren Schutzkörper 1 aus einer Mischung von Graphit und Aluminiumoxid mit einem Gehalt an Aluminiumoxid von etwa 50 bis 60 Gew.-% ist in dessen zentrischer Bohrung ein isolierendes Material und ein sauerstoffreduzierendes Material als Getterrohr 2 aus einem Gemisch aus Aluminiumoxid und Aluminium mit einem Aluminiumgehalt von etwa 20 Gew.-% angeordnet. Das Getterrohr 2 ist mit dem äußeren Schutzkörper 1 zusammengepresst. In dem Getterrohr 2 ist ein Thermoelementrohr 3 angeordnet, wobei zwischen dem Thermoelementrohr 3 und dem Getterrohr 2 ein Abstand 4 gebildet ist. Das Thermoelementrohr 3 mündet an seinem aus dem äußeren Schutzkörper 1 herausragenden Ende in ein sogenanntes Kontaktstück 5, das zum Kontaktieren mit einer weiteren Messleitung vorgesehen ist. Das Thermoelementrohr 3 mit dem Kontaktstück 5 ist mittels Zement 6 in dem äußeren Schutzkörper 1 befestigt. Innerhalb des Kontaktstückes 5 ist ebenfalls ein Zement 7 eingebracht, zur Fixierung des Thermoelementrohres 3 in dem rohrförmigen Kontaktstück 5. Innerhalb des Abstandes 4 ist Luft angeordnet.

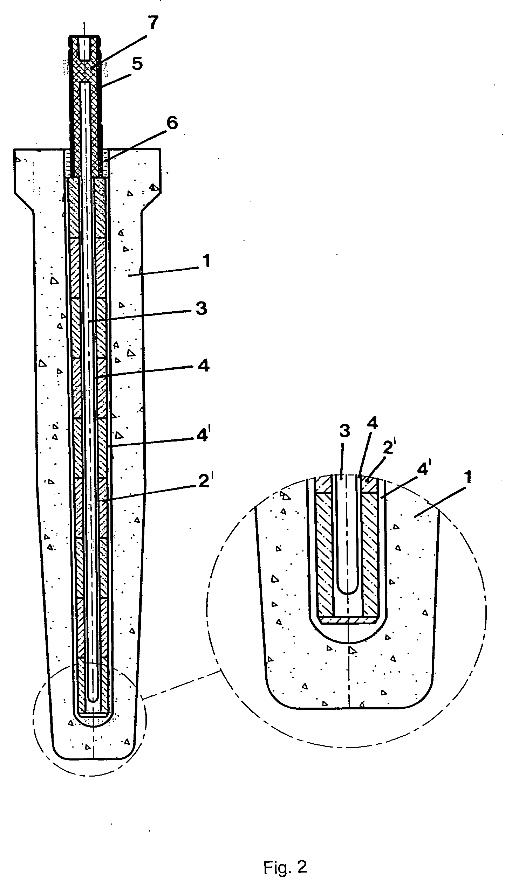

In Figur 2 ist ein weiteres Ausführungsbeispiel der Erfindung dargestellt. Dabei ist in dem äußeren Schutzkörper 1 ein Getterrohr 2' angeordnet, welches aus einer Vielzahl von aneinander fixierten Rohrsegmenten gebildet ist. Das Getterrohr 2' bildet einen Abstand 4' zu dem äußeren Schutzkörper 1 und einen Abstand 4 zu dem in dem Getterrohr 2' angeordneten Thermoelementrohr 3. Das Thermoelementrohr 3 mündet in dem Kontaktstück 5 und ist in diesem mittels Zement 7 fixiert. Das Kontaktstück 5 ist mittels Zement 6 in dem äußeren Schutzkörper 1 fixiert.

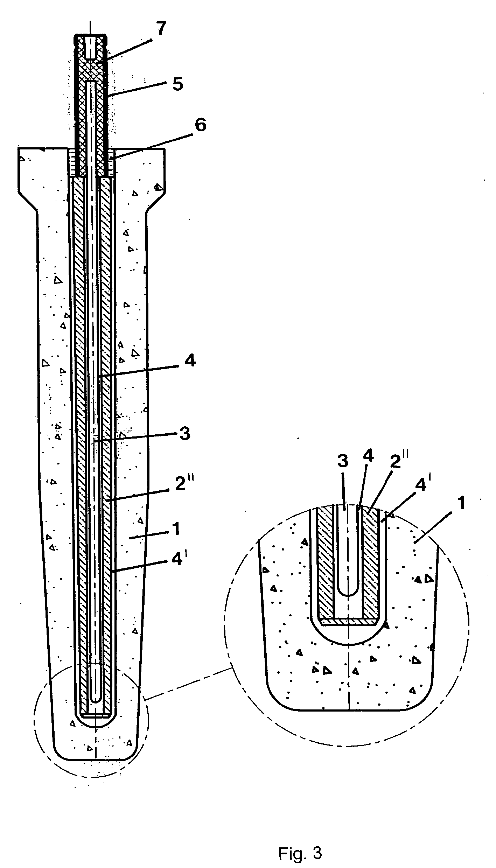

Figur 3 zeigt eine ähnliche Ausführungsform der Erfindung, wobei das Getterrohr 2' aus einem einzigen Stück besteht und unter Bildung eines Abstandes 4' in dem äußeren Schutzkörper 1 angeordnet ist. Zwischen dem Getterrohr 2" und dem darin angeordneten Thermoelementrohr 3 ist ebenfalls ein Abstand 4 angeordnet.

## Patentansprüche

1. Vorrichtung zur Temperaturmessung in Metallschmelzen, insbesondere in Eisen- oder Stahlschmelzen, mit einem Thermoelement, das in einem Thermoelementrohr angeordnet ist, mit einem äußeren Schutzkörper, der im wesentlichen aus Grafit und Metalloxid gebildet ist, wobei das Thermoelementrohr in dem Schutzkörper unter Bildung eines Zwischenraumes beabstandet angeordnet ist und wobei in dem Zwischenraum ein isolierendes Material und ein sauerstoffreduzierendes Material angeordnet sind, wobei das isolierende Material und das sauerstoffreduzierende Material als Pulvermischung ein Rohr (2;2';2") bilden, **dadurch gekennzeichnet, dass** das Rohr (2;2';2") das Thermoelementrohr (3) beabstandet umgibt oder dass das Rohr (2;2';2") von dem Schutzkörper (1) beabstandet umgeben ist, wobei der Abstand (4;4') zwischen dem Rohr (2;2';2") aus dem isolierenden Material und dem sauerstoffreduzierenden Material einerseits und dem Thermoelementrohr (3) oder dem Schutzkörper (1) andererseits zumindest teilweise gefüllt ist mit Fasern oder Kugeln und wobei die Fasern oder Kugeln aus Aluminiumoxid oder aus einer Mischung aus einem Oxid und einem sauerstoffreduzierenden Material gebildet sind.

2. Vorrichtung nach Anspruch 1, **dadurch gekennzeichnet, dass** als isolierendes Material ein Oxid, insbesondere Aluminiumoxid, und als sauerstoffreduzierendes Material ein Unedelmetall, insbesondere Aluminium, verwendet ist.

3. Vorrichtung nach Anspruch 2, **dadurch gekennzeichnet, dass** der Aluminiumgehalt, bezogen auf die Pulvermischung, 10 bis 40 Gew.-%, vorzugsweise 15 bis 33 Gew.-% beträgt.

4. Vorrichtung nach einem der Ansprüche 1 bis 3, **dadurch gekennzeichnet, dass** das Rohr (2;2';2") aus dem isolierenden und dem sauerstoftreduzierenden Material einseitig geschlossen, beidseitig offen oder als eine Vielzahl von Rohrsegmenten ausgebildet ist.

5. Vorrichtung nach einem der Ansprüche 1 bis 4, **dadurch gekennzeichnet, dass** das Rohr (2;2';2") aus dem isolierenden und dem sauerstoffreduzierenden Material zusätzlich zu der Pulvermischung ein Bindemittel aufweist.

6. Vorrichtung nach einem der Ansprüche 1 bis 5, **dadurch gekennzeichnet, dass** die Fasern oder Kugeln aus Aluminiumoxid oder aus einer Mischung aus Aluminiumoxid, und einem Unedelmetall, wie Aluminium gebildet sind.

## Claims

1. Apparatus for measuring the temperature in molten metals, in particular in molten iron or molten steel, comprising a thermocouple that is arranged in a thermocouple tube, with an external protection body that is essentially formed from graphite and metal oxide, whereby the thermocouple tube is arranged at the distance in the protection body such that an intervening space is formed and whereby an insulating material and an oxygen-reducing material are arranged in the intervening space, whereby the insulating material and the oxygen-reducing material, as a powder mixture, form a tube (2;2';2"), **characterised in that** the tube (2;2';2") surrounds the thermocouple tube (3) at a distance or **in that** the tube (2;2';2") is surrounded by the protection body (1) at a distance, whereby the distance (4;4') between the tube (2;2';2") made of the insulating material and the oxygen-reducing material on the one hand and the thermocouple tube (3) or the protection body (1) on the other hand is at least partially filled with fibres or spheres, and whereby the fibres or spheres are formed from aluminium oxide or from a mixture of an oxide and an oxygen-reducing material.

2. Apparatus according to claim 1, **characterised in that** an oxide, in particular aluminium oxide, is used as insulating material and a non-precious metal, in particular aluminium, is used as oxygen-reducing material.

3. Apparatus according to claim 2, **characterised in that** the aluminium content, relative to the powder mixture, is 10 to 40% by weight, preferably 15 to 33% by weight.

4. Apparatus according to any one of the claims 1 to 3, **characterised in that** the tube (2;2';2") made of the insulating and the oxygen-reducing material is closed on one side, is open on both sides or is provided in the form of a plurality of tube segments.

5. Apparatus according to any one of the claims 1 to 4, **characterised in that** the tube (2;2';2") made of the insulating and the oxygen-reducing material comprises a binding agent in addition to the powder mixture.

6. Apparatus according to any one of the claims 1 to 5, **characterized in that** the fibres or spheres are made of aluminium oxide or of a mixture of aluminium oxide and a non-precious metal, such as aluminium.

## Revendications

1. Dispositif de mesure de la température dans des fontes métalliques, en particulier dans des fontes de fer ou d'acier, comprenant un thermocouple qui est disposé dans un tube de thermocouple, comprenant un corps de protection extérieur qui est constitué essentiellement de graphite et d'oxyde métallique, dans lequel le tube de thermocouple est disposé à distance dans le corps de protection en formant un espace intermédiaire et dans lequel un matériau isolant et un matériau réducteur d'oxygène sont disposés dans l'espace intermédiaire, dans lequel le matériau isolant et le matériau réducteur d'oxygène forment un tube (2, 2', 2") en tant que mélange pulvérulent, **caractérisé en ce que** le tube (2, 2', 2") entoure à distance le tube de thermocouple (3) ou que le tube (2, 2', 2") est entouré à distance par le corps de protection (1), dans lequel l'écart (4, 4') entre le tube (2, 2', 2") en le matériau isolant et en le matériau réducteur d'oxygène d'une part et le tube de thermocouple (3) ou le corps de protection (1) d'autre part est au moins partiellement rempli de fibres ou de billes et dans lequel les fibres ou les billes sont constituées d'oxyde d'aluminium ou d'un mélange d'un oxyde et d'un matériau réducteur d'oxygène.

2. Dispositif selon la revendication 1, **caractérisé en ce qu'**un oxyde, en particulier de l'oxyde d'aluminium est employé en tant que matériau isolant et qu'un métal non précieux, en particulier de l'aluminium, est employé en tant que matériau réducteur d'oxygène.

3. Dispositif selon la revendication 2, **caractérisé en ce que** la teneur en aluminium, rapportée au mélange pulvérulent, fait 10 à 40 % en poids, de préférence 15 à 33 % en poids.

4. Dispositif selon l'une des revendications 1 à 3, **caractérisé en ce que** le tube (2, 2', 2") en le matériau isolant et en le matériau réducteur d'oxygène est fermé d'un côté, ouvert des deux côtés ou est formé en tant qu'une pluralité de segments de tube.

5. Dispositif selon l'une des revendications 1 à 4, **caractérisé en ce que** le tube (2, 2', 2") en le matériau isolant et en le matériau réducteur d'oxygène présente un liant en plus du mélange pulvérulent.

6. Dispositif selon l'une des revendications 1 à 5, **caractérisé en ce que** les fibres ou les billes sont constituées d'oxyde d'aluminium ou d'un mélange d'oxyde d'aluminium, et d'un métal non précieux comme aluminium.
